Europäisches Patentamt

**European Patent Office**

Office européen des brevets

(19)

(11) Numéro de publication: **0 218 663**
**B1**

# FASCICULE DE BREVET EUROPEEN

(12)

(45) Date de publication du fascicule du brevet:
**10.01.90**

(21) Numéro de dépôt: **86902425.7**

(22) Date de dépôt: **18.04.86**

(86) Numéro de dépôt international:
**PCT/FR 86/00130**

(87) Numéro de publication internationale:
**WO 86/06160 (23.10.86 Gazette 86/23)**

(51) Int. Cl.⁴: **G 01 C 23/00**

(54) **PROCEDE ET DISPOSITIF POUR LA REPRESENTATION DE L'HORIZON A BORD DES AERONEFS.**

(30) Priorité: **18.04.85 FR 8505854**

(43) Date de publication de la demande:
**22.04.87 Bulletin 87/17**

(45) Mention de la délivrance du brevet:
**10.01.90 Bulletin 90/2**

(84) Etats contractants désignés:
**DE GB**

(56) Documents cités:
**EP-A- 0 116 022**
**GB-A- 1 034 135**
**US-A- 3 737 846**

**Wescon Conference Record, volume 25, septembre 1981, El Sequndo, CA, (US), H.G. Stoll:" Friendly flight deck on the 767", pages 1-7, voir figures 7,8; page 3, colonne 2, dernier paragraphe - page 4, colonne 1, paragraphe 2**

(73) Titulaire: **AVIONS MARCEL DASSAULT-BREGUET AVIATION, 33, Rue du Professeur Victor Pauchet, F-92420 Vaucresson (FR)**

(72) Inventeur: **REYNAUD, Jean, Marie, 535, avenue Bonnemaison, F-84120 Pertuis (FR)**

(74) Mandataire: **Colas, Jean-Pierre et al, Cabinet de Boisse 37, avenue Franklin D. Roosevelt, F-75008 Paris (FR)**

## Description

La présente invention concerne un procédé et un dispositif pour la représentation de l'horizon à bord d'un aéronef, et, plus particulièrement, un procédé et un dispositif de ce genre qui puissent être utilisés dans le système d'assistance au pilotage du type dit «tête haute» que l'on trouve à bord de la plupart des véhicules aériens modernes.

On sait que l'assistance au pilotage d'un véhicule aérien dite «tête haute» consiste à projeter à l'infini devant les yeux du pilote des symboles pouvant représenter certains paramètres du vol de l'aéronef en question, ou même certains détails de son environnement. Le pilote peut ainsi connaître des informations représentées par divers symboles sans avoir à consulter le tableau de bord du véhicule aérien ou de son simulateur, si bien qu'il peut piloter en conservant la plupart du temps la tête haute. Comme, d'autre part, les symboles sont projetés à l'infini, le pilote n'a pas besoin de fournir des efforts d'accommodation oculaire pour prendre connaissance des informations qu'ils représentent.

La projection optique est alors effectuée par un dispositif que l'on appelle «collimateur tête haute» qui comporte notamment un dispositif d'affichage, comme par exemple un tube à faisceau cathodique, et des dispositifs optiques permettant d'assurer la projection de son écran à l'infini.

Un système d'assistance au pilotage «tête haute» comporte donc divers capteurs des paramètres du vol connectés à une chaîne de traitement et de transmission, laquelle aboutit à un générateur de symboles représentatifs des paramètres en question. C'est ce générateur de symboles lui-même qui commande le dispositif d'affichage du collimateur, lequel est le plus souvent un tube cathodique.

En ce qui concerne plus particulièrement la représentation de l'horizon, les paramètres dont les capteurs détectent la valeur sont les angles de tangage $\Theta$; de roulis $\phi$ et de cap $\psi$, ainsi que les vitesses de roulis et de tangage notées respectivement $p$ et $q$.

On connaît des instruments permettant de représenter l'horizont terrestre à bord d'un aéronef par rapport à la position de ce dernier. Ces dispositifs comportent le plus souvent une sphère ou un cylindre asservi aux angles de tangage, de roulis et de cap. Les deux moitiés, dans le cas d'une sphère, les deux hémisphères, sont de couleurs différentes, la partie supérieure étant généralement bleue et la partie inférieure marron ou noire. Seule la face avant de la sphère est visible, ce qui permet par appréciation de la quantité de bleu ou de marron vue par l'observateur, et en considérant l'orientation de la ligne de séparation entre les deux hémisphères, d'évaluer les angles de tangage et de roulis de l'avion. Des lignes graduées marquées sur la shpère permettent en outre d'obtenir des informations plus précises par référence à un repère fixe représentant les axes de l'aéronef.

Il est également connu de transposer sur un tube cathodique l'image que l'observateur reçoit de la sphère qui constitue l'élément essentiel de l'instrument classique décrit ci-dessus. Toutefois, une telle transposition ne peut pas être réalisée dans le cas d'un collimateur «tête haute» car les tubes cathodiques de tels appareils sont monochromes, de sorte que, bien évidemment, il est impossible de reproduire sur leur écran les plages bleues et marron ou noires que comporte la sphère ou le cylindre des dispositifs connus. En outre, un obstacle supplémentaire provient de ce qu'il ne faut pas surcharger l'image fournie par le tube cathodique pour que ce dernier puisse présenter d'autres informations que la représentation de l'horizon et pour que l'on puisse lire d'autres symboles à travers cette représentation de l'horizon et voir aussi le paysage extérieur.

Pour pallier ces difficultés, il a également été proposé de représenter l'horizon sur le tube cathodique d'un collimateur «tête haute» par une ligne dont l'inclinaison par rapport à l'horizontale correspond à l'angle de roulis, cependant que l'angle de tangage est figuré par des repères d'autant plus éloignés de la ligne représentant l'horizon que cet angle est plus grand, deux types de configurations différentes données à ces repères permettant de distinguer le signe de l'angle de tangage, et donc de déterminer si l'aéronef est en train de piquer ou de ce cabrer.

Cette solution constitue un pis-aller car les repères correspondant aux angles de tangage sont peu visibles et il existe un risque réel de confusion entre ceux de ces repères qui correspondent à un avion en piqué et ceux qui apparaissent lorsque cet avion est en train de se cabrer, notamment lorsque la ligne d'horizon n'est pas visible ou encore lorsqu'il s'agit d'un simulateur de vol où le pilote n'éprouve pas la sensation physique de la position de son avion. Un inconvénient supplémentaire apparaît lorsque les angles de roulis et de tangage prennent des valeurs élevées car il peut arriver que les repères en question disparaissent purement et simplement de l'écran du collimateur «tête haute».

Le but de l'invention est de pallier ces inconvénients et il est atteint grâce à un procédé pour la représentation de l'horizon à bord des aéronefs, selon lequel on affiche sur le tube cathodique du collimateur, à l'intérieur d'un cercle de petite dimension, d'une part, une ligne d'horizon qui est inclinée sur l'horizontale d'un angle égal à l'angle de roulis de l'aéronef mais de signe opposé qui est éloigné du centre du cercle d'une distance proportionnelle à l'angle de tangange, vers le haut lorsque l'aéronef est en piqué et vers le bas quand il est en train de se cabrer, et qui délimite deux zones de luminosités différentes, et, d'autre part, un point représentant un pôle qui est situé sur la médiane de la ligne d'horizon à une distance de cette dernière correspondant à un angle de tangage égal à 90 degrés.

On comprend que cette forme de visualisation fournit une image analogue à celle des sphères de dispositifs classiques dont le principe a été rappelé ci-avant, la présence d'un point représentant un pôle permettant, lors des passages à la verticale, d'assurer une continuité de l'information fournie au pilote sur les évolutions en cours. De préférence, le diamètre apparent pour le pilote du cercle à l'intérieur duquel s'inscrivent la ligne d'horizon et le point représentant un pôle est compris entre 10 et 30 milliaradians et, avantageusement, il est de l'ordre de 20 milliaradians, ce qui évite de surcharger l'image fournie par le collimateur, cette visualisation de l'horizont restant cependant parfaitement lisible.

Selon une forme de réalisation avantageuse de ce procédé, l'image en question n'apparaît sur l'écran du collimateur que si les valeurs absolues des angles de roulis et de tangage sont respectivement supérieures à des valeurs limites prédéterminées et, de préférence, si, en outre, les valeurs absolues des vitesses de roulis et de tangage sont, elles aussi, respectivement supérieures à des valeurs limites prédéterminées.

La présente invention concerne également un dispositif pour la mise en oeuvre du procédé spécifié ci-dessus, dispositif qui comprend des capteurs fournissant deux signaux qui sont fonction, respectivement, de l'angle de roulis et de l'angle de tangage et qui sont délivrés à un générateur de symboles, ce dernier fournissant à un collimateur des signaux correspondant à l'image de visualisation spécifiée ci-avant.

De préférence, ce dispositif comprend également une logique de présentation reliée au générateur de symboles et fournissant à ce dernier des signaux interrompant son fonctionnement lorsque la valeur absolue de l'angle de roulis et celle de l'angle de tangage deviennent respectivement inférieures à des valeurs limite prédéterminées. Avantageusement, ce dispositif comprend encore des capteurs fournissant deux signaux qui sont fonction, respectivement, de la vitesse de roulis et de la vitesse de tangage et qui sont délivrés à la logique de présentation en injectant dans le générateur de symboles des signaux de commutation interrompant son fonctionnement lorsque la valeur absolue de la vitesse de roulis et celle de la vitesse de tangage sont respectivement au dessous des valeurs limites prédéterminées.

La description qui va suivre et qui ne présente aucun caractère limitatif permettra de bien comprendre comment la présente invention peut être mise en pratique. Elle doit être lue en regard des figures annexées, parmi lesquelles:

La figure 1 représente une vue en perspective très schématique de la sphère qui représente l'horizon dans les appareils classiques;

Les figures 2A à 2C représentent, également de manière schématique, ce qu'un observateur voit de la sphère de la figure 1 pour trois positions différentes de l'aéronef;

La figure 3 représente l'écran d'un tube cathodique comportant la transposition classique de l'image fournie par la sphère de la figure 1;

Les figures 4A à 4F représentent le cercle de visualisation de la présente invention pour six positions différentes de l'aéronef;

La figure 5 est un diagramme très schématique du dispositif de mise en oeuvre de la présente invention.

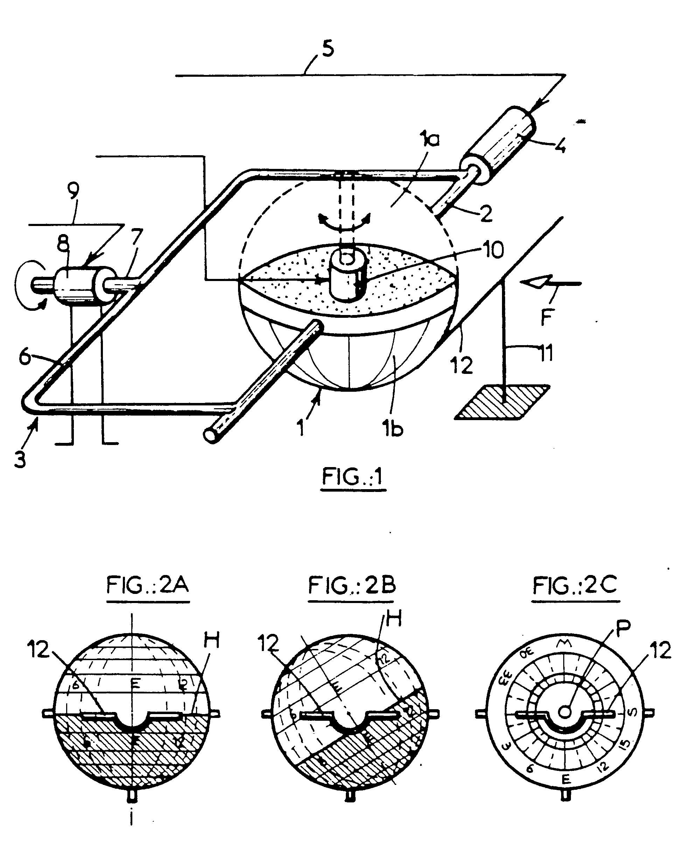

Les dispositifs classiques permettant la représentation de l'horizon à bord d'un aéronef utilisent généralement une sphère analogue à celle représentée schématiquement en 1 sur la figure 1. Cette sphère est solidaire d'un axe 2 qui passe par son centre et qui fait partie d'un cadre 3 la contournant par ses trois autres côtés. Un prolongement de l'axe 2 est accouplé à un moteur 4 qui peut l'entraîner en rotation et qui est asservi à l'angle de tangage 8 par l'intermédiaire d'un capteur non représenté et d'une ligne de transmission représentée schématiquement en 5. Le côté 6 du cadre 3 qui est opposé à l'axe 2 se prolonge vers l'extérieur et son milieu par un axe 7 accouplé à un moteur 8 susceptible de l'entraîner en rotation et, en conséquence, de faire tourner la sphère 1 autour d'un axe perpendiculaire à l'axe 2, le moteur 8 étant relié par une ligne 9 à un capteur non représenté qui délivre un signal d'asservissement à l'angle de roulis $\phi$. Le dispositif comprend encore un moteur de cap 10 pouvant fair tourner la sphère 1 autour d'un axe perpendiculaire au cadre 3 et une maquette réglable 11 qui représente schématiquement l'aéronef et qui comporte une tige horizontale 12 destinée à schématiser l'aéronef. Enfin, la surface de la sphère 1 comporte des méridiens et des parallèles gradués qui permettent d'évaluer avec une bonne approximation la valeur des angles de roulis, de tangage et de cap.

Les figures 2A à 2C montrent ce que voit un observateur qui regarde la sphère 1 de la figure 1 dans le sens de la flèche F qui est située dans le prolongement de l'axe 8 et à la hauteur de la barre 12 de la maquette 11. Dans le cas de la figure 2A, il s'agit d'un vol horizontal: la ligne d'horizon H se confond avec le repère horizontal 12 de la maquette réglable 11. Dans le cas d'un virage à droite avec un angle de roulis égal à 30 degrés, la trajectoire de l'aéronef restant située dans un plan horizontal (figure 2B), la ligne d'horizon H fait un angle de +30°, au sens trigonométrique du terme, avec le repère horizontal 12. Comme l'hémisphère supérieur 1a de la sphère 1 (figure 1) est peint en bleu et son hémisphère inférieur 1b en noir ou en marron ainsi que cela a été dit plus haut, il est possible d'apprécier le tangage et le roulis de l'avion par évaluation de la quantité de bleu et de marron et par l'orientation de la ligne de séparation H. Enfin, quand l'avion passe à la verticale (figure 2C), l'observateur n'aperçoit plus qu'un pôle P, le reste de l'image étant bleu ou marron (ou noir) selon qu'il s'agit d'un piqué ou d'un cabrage.

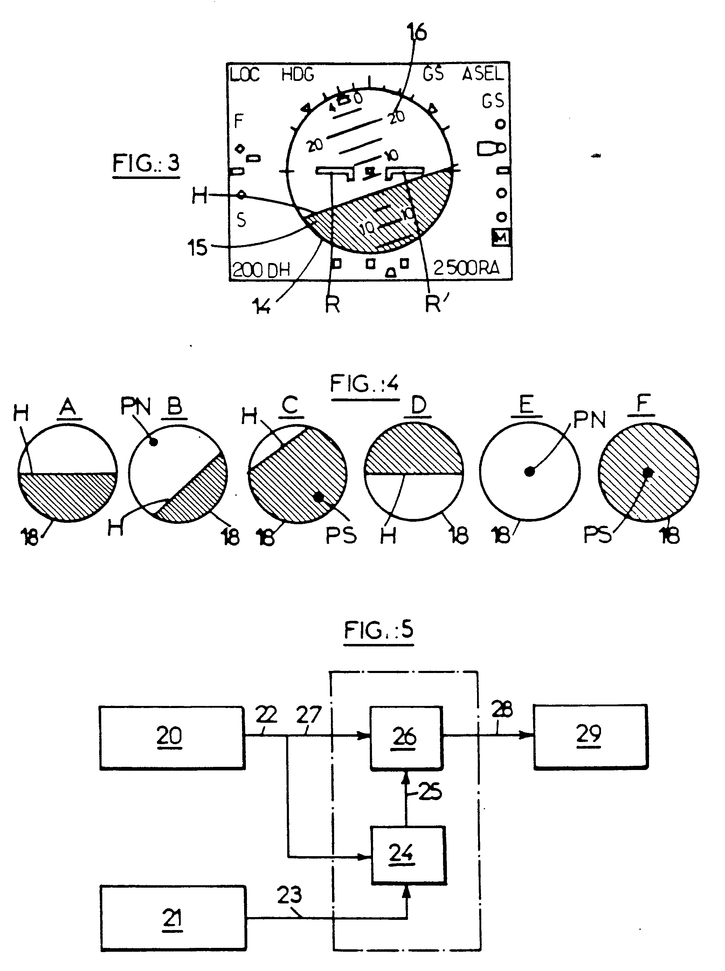

Comme on l'a indiqué ci-avant, il a déjà été proposé de transposer sur un tube cathodique les images du genre de celles des figures 2A à 2C. On obtient alors une représentation analogue à celle de la figure 3 avec un grand cercle 14 qui remplit pratiquement tout l'écran et qui est l'image du contour de la sphère 1 de la figure 1, avec une ligne d'horizon H à l'intérieur du cercle 14, avec des reprères $\underline{R}$ et $\underline{R}'$ correspondant à la barre 12 de la figure 1 et avec deux plages 15 et 16 de part et d'autre de la ligne d'horizon H qui s'étendent jusqu'au cercle 14.

Pour pallier les inconvénients rappelés ci-dessus d'une telle solution, et selon l'invention, on réduit le cercle 14 de la figure 3 jusqu'à ce que son diamètre apparent soit de l'ordre de 20 milliradians, son diamètre étant alors compris généralement entre 30 et 80 millimètres. On lui adjoint en outre la représentation sous la forme d'un point P de celui des pôles qui serait vu sur l'appareil classique de la figure 1 pour la position considérée de l'aéronef. Les cas des figures 4A à 4F correspondent aux situations suivantes:

– 4A: vol horizontal où les angles de tangage et de roulis sont nuls tous les deux. La ligne d'horizon H est horizontale et partage le cercle 18 en deux moitiés égales.

– 4B: l'avion vire à droite, ses ailes faisant un angle de 40 degrés sur l'horizontal et il est en train de se cabrer. La ligne d'horizon H fait un angle de +40° avec l'horizontale et elle est décalée vers le bas d'une quantité correspondant à l'angle de cabrage. Le pôle nord PN apparaît en haut de l'écran sur la médiane de la ligne H.

– 4C: situation analogue à celle de la figure 4B mais l'aéronef est cette fois en piqué. C'est alors le pôle sud PS qui apparaît dans la partie inférieure de la figure.

– 4D: vol sur le dos. La ligne d'horizon H passe par le centre du cercle 18 et elle est horizontale, la plage sombre de l'hémisphère inférieur étant cette fois au-dessus de la ligne H.

– 4E: passage à la verticale en cabré. L'image ne comporte plus qu'un point PN représentatif du pôle nord.

– 4F: passage à la verticale en position de piqué. C'est cette fois-ci le pôle sud PS qui apparaît sur l'image au centre d'une plage foncée correspondant à l'hémisphère inférieur 1b de la sphère 1 de la figure 1.

La figure 5 représente très schématiquement un dispositif électronique permettant de réaliser l'image qui vient d'être décrite en regard des figures 4A à 4F. Ce dispositif comprend tout d'abord deux groupes de capteurs 20, 21 fournissant, respectivement, des données angulaires correspondant aux angles de roulis et de tangage et, d'autre part, les données gyrométriques que sont les vitesses de roulis $p$ et de tangage $q$. Les données angulaires peuvent être fournies par une centrale à inertie ou par une centrale de cap et de verticale, cependant que les données gyrométriques peuvent être obtenues par dérivation des angles de roulis et de tangage provenant d'une centrale à inertie à plateforme ou d'une centrale de cap et de verticale, ou encore par une centrale à inertie à composants liés ou enfin par des capteurs gyrométriques qui sont par exemple ceux existant pour les commandes de vol. Les données provenant des groupes de capteurs 20 et 21 sont introduites par l'intermédiaire de lignes 22 et 23, respectivement, dans une logique de présentation 24 qui est reliée par une ligne 25 à une calculatrice de tracés 26 et qui fournit à cette dernière un signal de commutation la mettant hors service lorsque les valeurs absolues des angles de roulis et de tangage, d'une part et, d'autre part, des vitesses correspondantes sont inférieures à des valeurs limite prédéterminées. En outre, le groupe de capteurs de données angulaires 20 est relié directement à la calculatrice de tracés 26 par une ligne 27.

L'ensemble formé par la logique de présentation 24, la ligne 25 et la calculatrice 26 constitue un boîtier générateur de symboles qui, par l'intermédiaire d'une ligne 28, délivre au collimateur «tête haute» 29 des signaux fournissant une image analogue à celles des figures 4A à 4F.

Il est clair que, sans sortir du cadre de la présente invention, il serait possible d'apporter diverses modifications à la forme de réalisation qui vient d'être décrite. C'est ainsi, par exemple, qu'il serait possible de réaliser le dispositif de la figure 5 sous la forme d'une visualisation de planche de bord à tube cathodique ou à écran plat dont le diamètre pourrait être compris entre 30 et 80 millimètres.

## Revendications

1. Procédé pour la représentation de l'horizon à bord des aéronefs, selon lequel on affiche sur le tube cathodique d'un collimateur une ligne d'horizon dont l'inclinaison par rapport à l'horizontale correspond à l'angle de roulis, caractérisé en ce qu'on affiche sur ledit tube cathodique une image composée d'un cercle de diamètre apparent pour le pilote compris entre 10 et 30 milliradians, et à l'intérieur duquel on trouve, d'une part, ladite ligne d'horizon qui est inclinée sur l'horizontale d'un angle égal à l'angle de roulis de l'aéronef, mais de signe opposé, qui est éloignée du centre du cercle d'une distance fonction de l'angle de tangage, vers le haut lorsque l'aéronef est en piqué et vers le bas lorsqu'il est en train de se cabrer, et qui délimite deux zones de luminosités différentes, et, d'autre part, un point représentant un pôle situé sur la médiane de la ligne d'horizon à une distance de cette dernière correspondant à un angle de tangage égal à 90 degrés.

2. Procédé selon la revendication 1, caractérisé en ce que le diamètre apparent pour le pilote dudit cercle est voisin de 20 milliradians.

3. Procédé selon l'une quelconque des revendications 1 et 2, caractérisé en ce que l'image en question n'apparaît sur l'écran du collimateur que si la valeur absolue de l'angle de roulis et celle de l'angle de tangage sont respectivement supérieures à des valeurs limite prédéterminées.

4. Procédé selon la revendication 3, caractérisé en ce que ladite image n'apparaît sur l'écran du collimateur que si, en outre, la valeur absolue de la vitesse de roulis et celle de la vitesse de tangage sont respectivement supérieures à des valeurs limite prédéterminées.

5. Dispositif pour la mise en oeuvre du procédé selon l'une des revendications 1 à 4, et comportant un collimateur équipé d'un tube cathodique susceptible de produire ladite image, caractérisé en ce qu'il comprend des capteurs fournissant deux signaux qui sont fonction, respectivement, de l'angle de roulis et de l'angle de tangage et qui sont délivrés à un générateur de symboles, ce dernier fournissant audit collimateur des signaux correspondant à ladite image.

6. Dispositif selon la revendication 5, caractérisé en ce qu'il comprend en outre une logique de présentation reliée audit générateur de symboles et fournissant à ce dernier des signaux de commutation interrompant son fonctionnement lorsque la valeur absolue de l'angle de roulis et celle de l'angle de tangage deviennent respectivement inférieures à des valeurs limite prédéterminées.

7. Dispositif selon la revendication 6, caractérisé en ce qu'il comprend encore des capteurs fournissant deux signaux qui sont fonction, respectivement, de la vitesse de roulis et de la vitesse de tangage et qui sont délivrés à ladite logique de présentation, cette dernière fournissant au générateur de symboles des signaux de commutation interrompant son fonctionnement lorsque la valeur absolue de la vitesse de roulis et celle de la vitesse de tangage deviennent respectivement inférieures à des valeurs limite prédéterminées.

## Patentansprüche

1. Verfahren zur Anzeige des Horizontes an Bord eines Luftfahrzeuges, bei dem auf der Kathodenstrahlröhre eines Kollimators eine Horizontlinie sichtbar gemacht wird, deren Neigung in bezug auf die Horizontale dem Rollwinkel entspricht, dadurch gekennzeichnet, daß auf der Kathodenstrahlröhre eine Abbildung angezeigt wird, die aus einem Kreis mit für den Piloten erscheinbarem Durchmesser zwischen 10 und 30 Milliradianten besteht, in dessen Innerem man einerseits die Horizontallinie findet, deren Neigungswinkel zur Horizontalen dem Rollwinkel des Luftfahrzeuges jedoch mit entgegengesetztem Vorzeichen entspricht, die mit einem Abstand in Abhängigkeit von dem Nickwinkel nach oben hin von dem Mittelpunkt des Kreises beabstandet ist, wenn das Luftfahrzeug im Sinkflug ist und nach unten hin von dem Zentrum des Kreises beabstandet ist, wenn es im Steigflug ist, und die zwei Bereiche mit unterschiedlicher Helligkeit begrenzt und man andererseits einen Punkt findet, der einen auf der Mediane der Horizontlinie befindlichen Pol darstellt, dessen Entfernung zu der Horizontlinie einem Nickwinkel von 90° entspricht.

2. Verfahren nach Anspruch 1, dadurch gekennzeichnet, daß der für den Piloten scheinbare Durchmesser des Kreises im Bereich von 20 Milliradianten liegt.

3. Verfahren nach einem der Ansprüche 1 und 2, dadurch gekennzeichnet, daß die fragliche Abbildung nur auf dem Bildschirm des Kollimators erscheint, wenn der absolute Wert des Rollwinkels und der des Nickwinkels jeweils größer als vorher festgelegte Grenzwerte sind.

4. Verfahren nach Anspruch 3, dadurch gekennzeichnet, daß die erwähnte Abbildung nur auf dem Bildschirm des Kollimators erscheint, wenn außerdem der absolute Wert der Rollgeschwindigkeit und der der Nickgeschwindigkeit jeweils oberhalb von vorher festgelegten Grenzwerten liegen.

5. Vorrichtung zur Durchführung des Verfahrens nach einem der Ansprüche 1 bis 4 mit einem Kollimator, der mit einer zur Erzeugung der erwähnten Abbildung geeigneten Kathodenstrahlröhre ausgerüstet, ist, dadurch gekennzeichnet, daß sie Sensoren enthält, die zwei Signale liefern, die jeweils eine Funktion des Rollwinkels und des Nickwinkels sind und die einer Vorrichtung zur Erzeugung von Symbolen übermittelt werden, die dem Kollimator die entsprechenden Signale für die Abbildung liefert.

6. Vorrichtung nach Anspruch 5, dadurch gekennzeichnet, daß sie weiterhin eine Bilddarstellungslogik enthält, die mit der Vorrichtung zur Erzeugung von Symbolen verbunden ist und die der letzteren Schaltsignale übermittelt, die sein Funktionieren unterbrechen, wenn der Absolutwert des Rollwinkels und der des Nickwinkels jeweils kleiner als vorher festgelegte Grenzwerte werden.

7. Vorrichtung nach Anspruch 6, dadurch gekennzeichnet, daß sie noch zwei Sensoren enthält, die zwei Signale erzeugen, die jeweils eine Funktion der Rollgeschwindigkeit und der Nickgeschwindigkeit sind und die zu der Darstellungslogik übermittelt werden, die der Vorrichtung zur Erzeugung der Symbole Schaltsignale liefert, die dessen Funktionieren unterbrechen, wenn der absolute Wert der Rollgeschwindigkeit und der der Nickgeschwindigkeit jeweils kleiner werden als vorher festgelegte Grenzwerte.

## Claims

1. Process for representing the horizon on board aircraft wherein a horizon line which is inclined to the horizontal by an angle corresponding to the roll angle of the aircraft is displayed on the cathode ray tube of a collimator, characterized in that there is displayed on the said cathode ray tube an image composed of circle having an apparent diameter to the pilot of between 10 and 30 milliradians, and inside which are on the one hand the said horizon line which is inclined to the horizontal by an angle equal to the roll angle of the aircraft, but of opposite sign, and which is distant from the centre of the circle by a distance that depends on the pitch angle, towards the top when the aircraft is nose down and towards the bottom when it is in the process of nosing up, and which delimits two areas of different luminosities and, on the other hand, a point representing a pole which is situated on the median of the horizon line at a distance from that line corresponding to a pitch angle of 90 degrees.

2. Process according to claim 1, characterized in that the apparent diameter of the said circle to the pilot is of the order of 20 milliradians.

3. Process according to either of claims 1 and 2, characterized in that the image concerned appears on the sceen of the collimator only if the absolute values of the roll and pitch angles are respectively greater than predetermined limit values.

4. Process according to claim 3, characterized in that the said image appears on the screen of the collimator only if, in addition, the absolute values of the roll velocity and pitch velocity are respectively greater than predetermined limit values.

5. Device for the implementation of the process according to any of claims 1 to 4, and comprising a collimator provided with a cathode ray tube able to produce the said image, characterized in that it includes sensors providing two signals which depend on the roll angle and the pitch angle respectively and which are delivered to a symbols generator, the latter providing a collimator with signals corresponding to the above specified display image.

6. Device according to claim 5, characterized in that it also includes a presentation logic connected with the said symbols generator and supplying that generator with switching signals interrupting its functioning when the absolute value of the roll angle and that of the pitch angle, respectively become lower than predetermined limit values.

7. Device according to claim 6, characterized in that it also includes sensors providing two signals which depend respectively on the roll velocity and the pitch velocity and which are delivered to the said presentation logic, this logic supplying the symbols generator with switching signals interrupting its functioning when the absolute value of the roll velocity and that of the pitch velocity, respectively, become lower than predetermined limit values.

FIG.:1

FIG.:2A

FIG.:2B

FIG.:2C

FIG.: 3

FIG.:4

FIG.:5